# EUROPÄISCHE PATENTSCHRIFT

(11) **EP 3 781 454 B1**
(45) Veröffentlichungstag und Bekanntmachung des Hinweises auf die Patenterteilung: **19.07.2023**
(21) Anmeldenummer: 19720786.3
(22) Anmeldetag: 12.04.2019
(51) Int. Cl.: B62D 5/00, B62D 6/00

(54) **VERFAHREN ZUR STEUERUNG EINES STEER-BY-WIRE LENKSYSTEMS MIT EINEM BEGRENZER ZUM ERREICHEN EINES SICHERHEITSNIVEAUS**
METHOD FOR CONTROLLING A STEER-BY-WIRE STEERING SYSTEM COMPRISING A LIMITER FOR REACHING A SAFETY LEVEL
PROCÉDÉ DE COMMANDE D'UN SYSTÈME DE DIRECTION À COMMANDE ÉLECTRIQUE COMPRENANT UN LIMITEUR PERMETTANT D'ATTEINDRE UN NIVEAU DE SÉCURITÉ

(30) Priorität: 17.04.2018 DE 102018109084
(43) Veröffentlichungstag der Anmeldung: 24.02.2021
(73) Patentinhaber: thyssenkrupp Presta AG, 9492 Eschen (LI); thyssenkrupp AG, 45143 Essen (DE)
(72) Erfinder: VIZER, Daniel, 2064 Csabdi (HU); KAKAS, Peter, 1118 Budapest (HU)
(74) Vertreter: thyssenkrupp Intellectual Property GmbH
(86) Internationale Anmeldenummer: PCT/EP2019/059509
(87) Internationale Veröffentlichungsnummer: WO 2019/201792

(56) Entgegenhaltungen:
- EP-A1- 2 905 203
- EP-A1- 2 905 205
- EP-A1- 2 905 207
- DE-A1- 10 325 587
- US-A1- 2009 271 070
- US-A1- 2010 211 264
- US-A1- 2014 121 904
- US-A1- 2016 052 543
- US-B2- 6 763 908

## Beschreibung

Die vorliegende Erfindung betrifft ein Verfahren zur Steuerung eines Steer-by-Wire-Lenksystems mit den Merkmalen des Oberbegriffs des Anspruchs 1 und ein Steer-by-Wire-Lenksystem mit den Merkmalen des Oberbegriffs des Anspruchs 7.

Bei Steer-by-Wire-Lenksystemen ist die Stellung der gelenkten Räder nicht direkt mit dem Lenkeingabemittel, beispielsweise einem Lenkrad, gekoppelt. Es besteht eine Verbindung zwischen dem Lenkrad und den gelenkten Rädern über elektrische Signale. Der Fahrerlenkwunsch wird von einem Lenkwinkelsensor abgegriffen, und in Abhängigkeit von dem Fahrerlenkwunsch wird über einen Lenksteller die Stellung der gelenkten Räder geregelt. Eine mechanische Verbindung zu den Rädern ist nicht vorgesehen, sodass nach Betätigung des Lenkrads keine unmittelbare Kraft-Rückmeldung an den Fahrer übermittelt wird. Allerdings ist eine entsprechend angepasste Rückmeldung, beispielsweise beim Parken oder bei einer Geradeausfahrt, bei der ein der Fahrzeugreaktion angepasstes, je nach Fahrzeughersteller unterschiedliches Lenkmoment als Kraft-Rückmeldung gewünscht ist, vorgesehen. Bei einer Kurvenfahrt wirken Reaktionskräfte als Querkräfte auf das Lenkgetriebe, welche der Feedback-Aktuator in Form eines der Lenkrichtung entgegengesetzten Moments nachbildet. Der Fahrer erfährt ein dadurch vorgebbares Lenkgefühl. Um bei Steer-by-Wire-Lenkungen die Rückwirkungen der Straße auf das Lenkrad zu simulieren, ist es notwendig, am Lenkrad oder der Lenksäule einen Feedback-Aktuator (FBA) vorzusehen, welcher in Abhängigkeit von den gewünschten Rückwirkungen der Lenkhandhabe ein Lenkgefühl aufprägt. Das Bereitstellen dieses Lenkgefühls ist sicherheitskritisch für eine zuverlässige und sichere Steuerung des Fahrzeuges.

Aus EP 2 905 203 A1, EP 2 905 205 A1 und EP 2 905 207 A1 ist eine Stabilitätssteuervorrichtung bekannt, die in der Lage ist, ein unangenehmes Gefühl zu reduzieren, das einem Fahrer vermittelt wird. Die Stabilitätssteuervorrichtung erzeugt einen externen Störungsunterdrückungs-Drehwinkelbefehl zur Unterdrückung einer Abweichung von der Mitte der Fahrspur in einem Steer-By-Wire Lenksystem, und begrenzt währenddessen die Lenkreaktionskraft, die dem externen Störungsunterdrückungs-Drehwinkelbefehl entspricht, auf einen vorbestimmten Wert oder weniger.

US 2014/0121904 A1 beschreibt ein Verfahren zur Reduzierung des Lenkmoments in einem EPAS-Lenksystem. Die Reduzierung der Lenkmomente umfasst die Überwachung des von einem Fahrer des Fahrzeugs aufgebrachten Drehmoments, und die Reduzierung der Drehmomente wird mittels eines zentralen Reduktionsfaktors auferlegt, wenn die Überwachung eine Verletzung eines Sicherheitskriteriums ergibt. Das Sicherheitskriterium kann die Überwachung des maximal zulässigen Fahrermoments und/oder seitliche dynamische Reaktionen oder Gierraten des Fahrzeugs umfassen.

Es ist Aufgabe der vorliegenden Erfindung, ein verbessertes Verfahren zur sicheren Bereitstellung eines Lenkgefühls eines Feedback-Aktuators für eine Steer-by-Wire Lenkung eines Kraftfahrzeuges anzugeben.

Diese Aufgabe wird von einem Verfahren zur Steuerung eines Steer-by-Wire-Lenksystems für Kraftfahrzeuge mit den Merkmalen des Anspruchs 1 und einem Steer-by-Wire-Lenksystems für Kraftfahrzeuge mit den Merkmalen des Anspruchs 7 gelöst. In den Unteransprüchen sind vorteilhafte Weiterbildungen der Erfindung genannt.

Demnach ist ein Verfahren zur Steuerung eines Steer-by-Wire-Lenksystems für Kraftfahrzeuge umfassend einen auf die gelenkten Räder wirkenden, in Abhängigkeit eines Fahrerlenkwunsches elektronisch geregelten Lenksteller, einen Rückwirkungen der Straße auf ein Lenkrad übertragenden Feedback-Aktuator, und eine Steuereinheit, die den Feedback-Aktuator steuert, vorgesehen, wobei das Verfahren folgende Verfahrensschritte zur Berechnung eines Motordrehmomentes umfasst:
- Bestimmen eines Basis-Motordrehmoments, welches fahrzeugzustands- und lageabhängig ist;
- Bereitstellen wenigstens einer Lenkfunktion, die Teil einer ersten Untergruppe von Lenkfunktionen ist;
- Begrenzen des Ausgangswertes der wenigstens einen Lenkfunktion zum Erreichen eines vorgegebenen Sicherheitsniveaus in einem ersten Begrenzer;
- Adaption des Basis-Motordrehmoments mittels des begrenzten Ausgangswert der wenigstens einen Lenkfunktion in einem Summierer;
- Ansteuern des Feedback-Aktuators mit dem von dem Summierer ausgegebenen resultierenden Motordrehmoment.

Durch dieses Verfahren kann auf eine Weise sichergestellt werden, dass die von der wenigstens einen Lenkfunktion berechneten Werte in einem sicheren Motordrehmoment bzw. Rückstellmoment resultieren. Unter "sicher" wird in diesem Fall verstanden, dass der Feedback-Aktuator nicht blockiert oder eine ungewünschte Bewegung der Lenkhandhabe im Rahmen einer Selbstlenkung vornimmt.

Die wenigstens eine Lenkfunktion weist eine Lenkfunktion zum Bereitstellen einer Lenkungsdämpfung, einer Lenkungshysterese und/oder zum Rückstellen des Lenkrades zur Mitte auf. Diese Lenkfunktionen bilden ein Lenkgefühl einer konventionellen, elektromechanischen Lenkung ab.

Der erste Begrenzer begrenzt den Ausgangswert der wenigstens einen Lenkfunktion in Abhängigkeit von wenigstens einem Parameter ausgewählt aus der Gruppe umfassend eine Fahrzeuggeschwindigkeit, eine Winkelgeschwindigkeit des Motors des Feedback-Aktuators, ein vom dem Fahrer aufgebrachtes Drehmoment am Lenkrad und ein Lenkradlenkwinkel. Dazu hat der Begrenzer vorzugsweise für jeden Wert des relevanten Parameters ein maximal zulässiges Motordrehmoment hinterlegt.

Es kann aber auch vorgesehen sein, dass der Begrenzer den Ausgangswert der wenigstens einen Lenkfunktion auf ein begrenztes Basismotordrehmoment begrenzt, wobei das begrenzte Basismotordrehmoment durch Anwenden eines oberen Grenzwertes und eines unteren Grenzwertes auf das Basismotordrehmoment berechnet wird. Dabei wird bevorzugt der obere und untere Grenzwert in Abhängigkeit der Fahrzeuggeschwindigkeit berechnet.

In dem Fall, dass wenigstens zwei Lenkfunktionen vorgesehen sind, deren Ausgangswerte nicht das benötigte Sicherheitsniveau aufweisen, werden diese in einem ersten Summierer verrechnet, bevor sie in dem ersten Begrenzer begrenzt werden.

Es kann weiterhin eine zweite Untergruppe an Lenkfunktionen mit wenigstens einer Lenkfunktion vorgesehen sein, deren Ausgangswert in den Summierer zur Adaption des Basis-Motordrehmoments einfließt. Sollte diese Lenkfunktion Ausgangswerte mit einem zu niedrigen Sicherheitsniveau ermitteln, kann ein weiterer Begrenzer vorgesehen sein.

Die Aufgabe wird zudem von einem Steer-by-Wire-Lenksystem für Kraftfahrzeuge umfassend einen auf die gelenkten Räder wirkenden, in Abhängigkeit eines Fahrerlenkwunsches elektronisch geregelten Lenksteller, einen Rückwirkungen der Straße auf ein Lenkrad übertragenden Feedback-Aktuator, und eine Steuereinheit, die den Feedback-Aktuator steuert, gelöst, wobei die Steuereinheit dazu eingerichtet ist das zuvor beschriebene Verfahren auszuführen.

Zwei bevorzugte Ausführungsformen der Erfindung werden nachfolgend anhand der Zeichnungen näher erläutert. Gleichartige oder gleichwirkende Bauteile werden in den Figuren mit denselben Bezugszeichen bezeichnet. Es zeigen:
- Fig. 1:: ein Blockdiagramm einer Steuerung eines Steer-by-Wire-Lenksystems,
- Fig. 2:: ein Blockdiagramm einer erfindungsgemäßen Berechnung eines Motordrehmomentes zur Ansteuerung eines Feedback-Aktuators, sowie
- Fig. 3:: ein Blockdiagramm einer zweiten erfindungsgemäßen Berechnung eines Motordrehmomentes zur Ansteuerung eines Feedback-Aktuators.

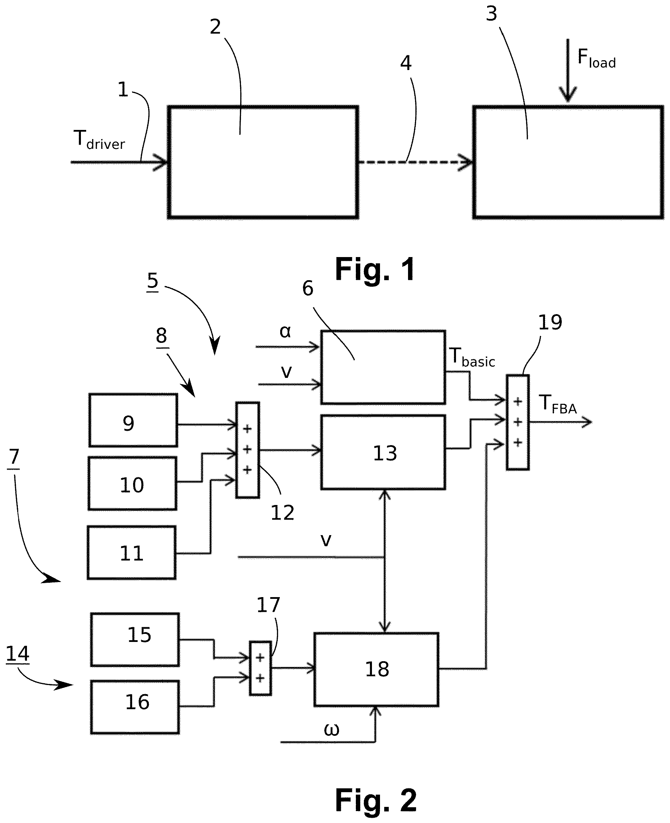

In der Figur 1 ist ein Blockdiagramm einer Steer-by-Wire-Lenkung gezeigt. Ein an einer Lenkwelle angebrachter Drehwinkelsensor erfasst das durch Drehen eines Lenkrads aufgebrachte Fahrerlenkmoment T_{driver}. Das Fahrerlenkmoment T_{driver} wird über eine Signalleitung 1 an einen Feedback-Aktuator 2 übermittelt, welcher dazu dient, die Rückwirkungen von der Fahrbahn auf das Lenkrad zu übertragen bzw. einen Lenkaufwand (engl. steering effort) darzustellen und somit dem Fahrer eine Rückmeldung über das Lenk- und Fahrverhalten des Fahrzeugs zu geben. Der Feedback-Aktuator 2 steuert in Abhängigkeit von dem Signal des Drehwinkelsensors sowie weiteren Eingangsgrößen, wie z. B. Fahrzeuggeschwindigkeit, Gierrate und dergleichen einen elektrischen Lenksteller 3 über eine Signalleitung 4 an, welcher die Stellung der gelenkten Räder steuert. Der Lenksteller 3 wirkt über ein Zahnstangen-Lenkgetriebe sowie Spurstangen und anderen Bauteilen mittelbar auf die gelenkten Räder. Herkömmlicherweise werden die Rückmeldungseigenschaften der Lenkung durch die Zahnstangenkraft F_{load} bestimmt, die von den Spurstangen, welche über das Fahrwerk an die Räder angebunden sind, auf die Zahnstange wirkt. Die Zahnstangenkraft F_{load} wird maßgeblich von den aktuellen Seitenführungskräften beeinflusst. Damit entspricht ein wesentlicher Teil der aktuellen Zahnstangenkraft F_{load} einer Querbeschleunigung. Die Zahnstangenkraft F_{load} wird aber nicht nur durch die während des Durchfahrens einer Kurve auftretenden Seitenkräfte bestimmt, sondern es hat eine Vielzahl von weiteren Größen einer aktuellen Fahrsituation einen Einfluss auf die Zahnstangenkraft F_{load}. Ein Beispiel hierfür ist die Fahrbahnbeschaffenheit (Unebenheiten, Spurrillen, Reibwert).

Wie in Figur 2 dargestellt, berechnet eine Steuereinheit 5 ein zur Bereitstellung eines Lenkgefühls benötigtes Motordrehmoment T_{FBA}. Das Motordrehmoment T_{FBA} resultiert in einem am Lenkrad anliegenden Rückstellmoment, das einem vom Fahrer aufgebrachten Lenkbefehl entgegen wirkt.

Es findet dabei eine Vielzahl an Lenkfunktionen Verwendung. Im Wesentlichen teilt sich die Berechnung des Motordrehmomentes T_{FBA} in zwei Hauptteile auf. In einem ersten Teil 6 wird ein Basismotordrehmoment T_{basic} anhand des Drehwinkels α und der Fahrzeuggeschwindigkeit v bestimmt. Es können bei der Berechnung weitere Größen, wie beispielsweise der Gierwinkel und die Querbeschleunigung des Fahrzeuges einfließen. Die dazu vorgesehene Basiskurve, die Lenkgeschwindigkeit und Fahrzeuggeschwindigkeit abhängig ist, liefert stets ein sicheres Basismotordrehmoment T_{basic} was ein Basislenkgefühl am Lenkrad hervorruft.

In einem zweiten Teil 7 wird eine Vielzahl an Lenkfunktionen zur Adaption des Basislenkgefühls verwendet. Um dem Fahrer bei einer Steer-by-Wire-Lenkung das Gefühl einer konventionellen Lenkung zu vermitteln, ist in einer ersten Untergruppe 8 eine Lenkfunktion zum Bereitstellen einer Lenkungsdämpfung 9 vorgesehen, die heftige oder abrupte Lenkreaktionen und Lenkbewegungen dämpft. Zudem umfasst die erste Untergruppe 8 bevorzugt eine Lenkfunktion 10, die eine Lenkungshysterese (Lenkmoment-Lenkwinkel) bereitstellt, die die Lenkungsreibung bestimmt. Es können in der ersten Untergruppe 8 weitere Lenkfunktionen 11 vorgesehen sein, beispielsweise eine Funktion zum Rückstellen des Lenkrades zur Mitte und dergleichen. Die Ausgangswerte der Lenkfunktionen der ersten Untergruppe 8 werden einem ersten Summierer 12 zugeführt. Da die Ausgangswerte nicht das benötigte Sicherheitsniveau aufweisen, wird das Ausgangssignal des ersten Summierers 12 in einem ersten Begrenzer 13 zum Erreichen des benötigten Sicherheitsniveaus begrenzt. Der erste Begrenzer 13 kann dabei das Ausgangssignal des ersten Summierers 12 in Abhängigkeit von den folgenden Parametern begrenzen: der Fahrzeuggeschwindigkeit, der Winkelgeschwindigkeit des Motors, dem vom Fahrer aufgebrachten Drehmoment am Lenkrad und/oder dem Lenkradlenkwinkel. Hier dargestellt ist eine Begrenzung in Abhängigkeit der Fahrzeuggeschwindigkeit v. Der erste Begrenzer 13 stellt somit sicher, dass das von dem ersten Summierer 12 ausgegebene Motordrehmoment innerhalb eines zulässigen Bereichs ist und eine unkontrollierbare Motordrehmomentanfrage nicht an den Feedback-Aktuator weitergegeben wird. Dafür weist der erste Begrenzer 13 das maximal zulässige Motordrehmoment für die entsprechenden Werte der zuvor aufgelisteten Parameter auf. Es ist eine fahrzeuggeschwindigkeitsabhängige Motordrehmomentgrenze vorgesehen. Bei den Werten kann es sich um Messwerte oder Schätzwerte handeln, die das benötigte Sicherheitsniveau haben. Das maximal zulässige Motordrehmoment wird über das maximal zulässige Rückstellmoment des Feedback-Aktuators am Lenkrad definiert.

Es ist weiterhin eine zweite Untergruppe 14, die die Dämpfungsfunktionen und den Begrenzer enthält, mit Lenkfunktionen 15,16 vorgesehen, deren Ausgangswerte in einem zweiten Summierer 17 verrechnet werden und durch einen zweiten Begrenzer 18 begrenzt werden. Dieser zweite Begrenzer 18 nimmt eine Begrenzung in Abhängigkeit von der Fahrzeuggeschwindigkeit v und der Winkelgeschwindigkeit des Motors ω vor.

Ein dritter Summierer 19 verrechnet des Basismotordrehmomentes T_{basic} mit dem ersten Ausgangsmotordrehmoment des ersten Begrenzers 13 und dem zweiten Ausgangsmotordrehmoment des zweiten Begrenzers 18. Es können auch noch weitere Lenkfunktionen vorgesehen sein, die bereits das benötigte Sicherheitsniveau erfüllen und ebenfalls in den dritten Summierer 19 einfließen. Das Ausgangssignal des dritten Summierers 19 ist das zu Ansteuerung des Feedback-Aktuators verwendete resultierende Motordrehmoment T_{FBA}.

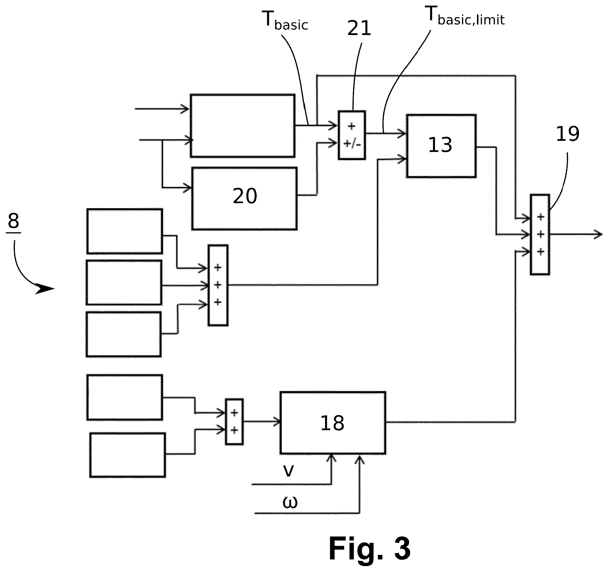

Figur 3 zeigt eine zweite Ausführungsform der Erfindung bei der im Unterschied zu der zuvor beschriebenen Ausführungsform der Figur 2, eine Grenzwertberechnung mit einem oberen Grenzwert und einem unteren Grenzwert stattfindet. Die Berechnung der Grenzwerte erfolgt dabei in Abhängigkeit von der Fahrzeuggeschwindigkeit v in einer Grenzwertberechnungseinheit 20. In einer Recheneinheit 21 wird das Basismotordrehmoment T_{basic} auf die berechneten Grenzwerte begrenzt. Das begrenzte Basismotordrehmoment T_{basic,limit} wird an den ersten Begrenzer 13 weitergegeben, so dass dieser das Signal der ersten Untergruppe 8 auf das begrenzte Basismotordrehmoment T_{basic,limit} begrenzt. Die Ausgangswerte des ersten Begrenzers 13 und des zweiten Begrenzers 18 sowie das ursprünglich berechnete Basismotordrehmoment T_{basic} fließen dann in den dritten Summierer 19 ein. Es kann somit sichergestellt werden, dass das zur Ansteuerung des Motors verwendete resultierende Motordrehmoment das benötigte Sicherheitsniveau aufweist.

## Patentansprüche

1. Verfahren zur Steuerung eines Steer-by-Wire-Lenksystems für Kraftfahrzeuge umfassend einen auf die gelenkten Räder wirkenden, in Abhängigkeit eines Fahrerlenkwunsches elektronisch geregelten Lenksteller (3), einen Rückwirkungen der Straße auf ein Lenkrad übertragenden Feedback-Aktuator (2), und eine Steuereinheit (5), die den Feedback-Aktuator (2) steuert, wobei folgende Verfahrensschritte zur Berechnung eines Motordrehmomentes (T_{FBA}) zum Ansteuern eines Motors des Feedback-Aktuators (2) vorgesehen sind:
• Bestimmen eines Basis-Motordrehmoments (T_{basic}), welches fahrzeugzustands- und lageabhängig ist;
• Bereitstellen wenigstens einer Lenkfunktion (9,10,11), die Teil einer ersten Untergruppe von Lenkfunktionen (8) ist;
• Begrenzen des Ausgangswertes der wenigstens einen Lenkfunktion (9,10,11) zum Erreichen eines vorgegebenen Sicherheitsniveaus in einem ersten Begrenzer (13);
• Adaption des Basis-Motordrehmoments (T_{basic}) mittels des begrenzten Ausgangswert der wenigstens einen Lenkfunktion in einem Summierer (19) um ein resultierendes Motordrehmoment (T_{FBA}) zu erhalten;
• Ansteuern des Feedback-Aktuators (2) mit dem von dem Summierer (19) ausgegebenen resultierenden Motordrehmoment (T_{FBA}),
**dadurch gekennzeichnet, dass** die wenigstens eine Lenkfunktion (9,10,11) eine Lenkfunktion zum Bereitstellen einer Lenkungsdämpfung, einer Lenkungshysterese und/oder zum Rückstellen des Lenkrades zur Mitte aufweist, wobei der erste Begrenzer (13) den Ausgangswert der wenigstens einen Lenk-funktion (9,10,11) in Abhängigkeit von wenigstens einem Parameter ausgewählt aus der Gruppe umfassend eine Fahrzeuggeschwindigkeit (v), eine Winkelgeschwindigkeit (ω) des Motors des Feedback-Aktuators, ein vom dem Fahrer aufgebrachtes Drehmoment am Lenkrad und ein Lenkradlenkwinkel (α) begrenzt.

2. Verfahren nach Anspruch 1, **dadurch gekennzeichnet, dass** der erste Begrenzer (13) für jeden Wert des relevanten Parameters ein maximal zulässiges Motordrehmoment aufweist.

3. Verfahren nach Anspruch 1, **dadurch gekennzeichnet, dass** der erste Begrenzer (13) den Ausgangswert der wenigstens einen Lenkfunktion (9,10,11) auf ein begrenztes Basismotor-drehmoment (T_{basic,limit}) begrenzt, wobei das begrenzte Basismotordreh-moment (T_{basic,limit}) durch Anwenden eines oberen Grenzwertes und eines unteren Grenzwertes auf das Basismotordrehmoment (T_{basic}) berechnet wird.

4. Verfahren nach Anspruch 3, **dadurch gekennzeichnet, dass** der obere und untere Grenzwert in Abhängigkeit der Fahrzeuggeschwindigkeit (v) berechnet wird.

5. Verfahren nach einem der vorhergehenden Ansprüche, **dadurch gekennzeichnet, dass** wenigstens zwei Lenkfunktion (9,10,11) vorgesehen sind, deren Ausgangswerte in einem ersten Summierer (12) verrechnet werden, bevor der Ausgangswert des ersten Summierers (12) in dem ersten Begrenzer (13) begrenzt werden.

6. Verfahren nach einem der vorhergehenden Ansprüche, **dadurch gekennzeichnet, dass** eine zweite Untergruppe an Lenkfunktionen (14) mit wenigstens einer Lenkfunktion (15,16) vorgesehen ist, deren Ausgangswert in den Summierer (19) zur Adaption des Basis-Motordrehmoments (T_{basic}) einfließen.

7. Steer-by-Wire-Lenksystem für Kraftfahrzeuge umfassend einen auf die gelenkten Räder wirkenden, in Abhängigkeit eines Fahrerlenkwunsches elektronisch geregelten Lenksteller (3), einen Rückwirkungen der Straße auf ein Lenkrad übertragenden Feedback-Aktuator (2), und eine Steuereinheit (5), die den Feedback-Aktuator (2) steuert, **dadurch gekennzeichnet, dass** die Steuereinheit (5) dazu eingerichtet ist das Verfahren nach einem der vorhergehenden Ansprüche 1 bis 6 auszuführen.

## Claims

1. A method for controlling a steer-by-wire steering system for motor vehicles, comprising a steering actuator (3) which acts on the steered wheels and is electronically controlled in accordance with a driver's steering request, a feedback actuator (2) which transmits reactions of the road to a steering wheel, and a control unit (5) which controls the feedback actuator (2), wherein the following method steps for calculating a motor torque (T_{FBA}) for controlling the motor of the feedback actuator (2) are provided:
• determining a basic motor torque (T_{basic}) which is dependent on the driving state and on the position;
• providing at least one steering function (9, 10, 11) which is part of a first subgroup of steering functions (8);
• limiting the output value of the at least one steering function (9, 10, 11) to reach a predefined safety level in a first limiter (13);
• adaptation of the basic motor torque (T_{basic}) by means of the limited output value of the at least one steering function in a summing element (19) to obtain a resulting motor torque (T_{FBA});
• actuating the feedback actuator (2) with the resulting motor torque (T_{FBA}) which is output by the summing element (19),
**characterized in that** the at least one steering function (9, 10, 11) has a steering function for providing a damping of the steering, a steering hysteresis and/or for resetting the steering wheel to the center, wherein the first limiter (13) limits the output value of the at least one steering function (9, 10, 11) in accordance with at least one parameter selected from the group comprising a vehicle speed (v), an angular speed (ω) of the motor of the feedback actuator, a torque, applied by the driver, at the steering wheel, and a steering wheel steering angle (α).

2. The method as claimed in claim 1, **characterized in that** the first limiter (13) has a maximum permissible motor torque for each value of the relevant parameter.

3. The method as claimed in claim 1, **characterized in that** the first limiter (13) limits the output value of the at least one steering function (9, 10, 11) to a limited basic motor torque (T_{basic,limit}), wherein the limited basic motor torque (T_{basic,limit}) is calculated by applying an upper limiting value and a lower limiting value to the basic motor torque (T_{basic}).

4. The method as claimed in claim 3, **characterized in that** the upper and lower limiting values are calculated as a function of the vehicle speed (v).

5. The method as claimed in one of the preceding claims, **characterized in that** at least two steering functions (9, 10, 11) are provided, the output values of which are combined in a first summing element (12) before the output value of the first summing element (12) is limited in the first limiter (13).

6. The method as claimed in one of the preceding claims, **characterized in that** a second subgroup of steering functions (14) is provided with at least one steering function (15, 16) whose output value is input into the summing element (19) for the adaptation of the basic motor torque (T_{basic}) .

7. A steer-by-wire steering system for motor vehicles, comprising a steering actuator (3) which acts on the steered wheels and is electronically controlled in accordance with a driver's steering request, a feedback actuator (2) which transmits reactions at the road to a steering wheel, and a control unit (5) which controls the feedback actuator (2), **characterized in that** the control unit (5) is configured to execute the method as claimed in one of the preceding claims 1 to 6.

## Revendications

1. Procédé pour commander un système de direction à commande électrique pour véhicules automobiles comprenant un dispositif de réglage (3) réglé électroniquement en fonction d'un souhait de direction du conducteur et agissant sur les roues dirigées, un actionneur par voie retour (2) transmettant des répercussions de la route à une roue motrice et une unité de commande (5) commandant l'actionneur par voie retour (2), dans lequel les étapes de procédé suivantes sont prévues pour calculer un couple de rotation du moteur (T_{FBA}) en vue de commander un moteur de l'actionneur par voie retour (2) :
- détermination d'un couple de rotation du moteur de base (T_{basic}) dépendant de la position et de l'état du véhicule ;
- mise à disposition d'au moins une fonction de direction (9, 10, 11) faisant partie d'un premier sous-groupe de fonctions de direction (8) ;
- limitation de la valeur de sortie de l'au moins une fonction de direction (9, 10, 11) pour atteindre un niveau de sécurité prédéfini dans un premier limiteur (13) ;
- adaptation du couple de rotation du moteur de base (T_{basic}) à l'aide de la valeur de sortie limitée de l'au moins une fonction de direction dans un additionneur (19) pour obtenir un couple de rotation du moteur résultant (T_{FBA}) ;
- commande de l'actionneur par voie retour (2) avec le couple de rotation du moteur résultant (T_{FBA}) donné par l'additionneur (19) ;
**caractérisé en ce que** l'au moins une fonction de direction (9, 10, 11) comporte une fonction de direction permettant de mettre à disposition un amortissement de direction, une hystérèse de direction et/ou permettant de ramener en arrière la roue motrice en direction du centre, dans lequel le premier limiteur (13) limite la valeur de sortie de l'au moins une fonction de direction (9, 10, 11) en fonction d'au moins un paramètre sélectionné dans le groupe comprenant une vitesse du véhicule (v), une vitesse angulaire (ω) du moteur de l'actionneur par voie retour, un couple de rotation de la roue motrice appliqué par le conducteur et un angle de direction de roue motrice (α).

2. Procédé selon la revendication 1, **caractérisé en ce que** le premier limiteur (13) comporte pour chaque valeur du paramètre important un couple de rotation du moteur maximal admis.

3. Procédé selon la revendication 1, **caractérisé en ce que** le premier limiteur (13) limite la valeur de sortie de l'au moins une fonction de direction (9, 10, 11) à un couple de rotation du moteur de base limité (T_{basic,limit}), dans lequel le couple de rotation de base délimité (T_{basic,limit}) est calculé par application d'une valeur limite supérieure et d'une valeur limite inférieure au couple de rotation du moteur de base (T_{basic}) .

4. Procédé selon la revendication 3, **caractérisé en ce que** la valeur limite supérieure et inférieure est calculée en fonction de la vitesse du véhicule (v).

5. Procédé selon l'une quelconque des revendications précédentes, **caractérisé en ce qu'**au moins deux fonctions de direction (9, 10, 11) sont prévues dont les valeurs de sortie sont calculées dans un premier additionneur (12) avant que la valeur de sortie du premier additionneur (12) soit limitée dans le premier limiteur (13) .

6. Procédé selon l'une quelconque des revendications précédentes, **caractérisé en ce qu'**un deuxième sous-groupe de fonctions de direction (14) est prévu avec au moins une fonction de direction (15, 16) dont la valeur de sortie est utilisée dans l'additionneur (19) pour adapter le couple de rotation du moteur de base (T_{basic}) .

7. Système de direction à commande électrique pour véhicules automobiles comprenant un dispositif de réglage (3) réglé électroniquement en fonction d'un souhait de direction du conducteur et agissant sur les roues dirigées, un actionneur par voie retour (2) transmettant des répercussions de la route à une roue motrice et une unité de commande (5) commandant l'actionneur par voie retour (2), **caractérisé en ce que** l'unité de commande (5) est conçue pour le procédé selon l'une quelconque des revendications précédentes 1 à 6.
